# EUROPÄISCHE PATENTANMELDUNG

(11) **EP 0 616 206 A2**
(43) Veröffentlichungstag der Anmeldung: **21.09.1994**
(21) Anmeldenummer: 94104085.9
(22) Anmeldetag: 16.03.1994
(51) Int. Cl.: G01N 21/00, G01N 21/53

(54) **Anordnung zum Messen von Trübungen**

(30) Priorität: 17.03.1993 DE 4308486
(71) Anmelder: GRUNDIG E.M.V. Elektro-Mechanische Versuchsanstalt Max Grundig GmbH & Co. KG, D-90762 Fürth (DE)
(72) Erfinder: Rumland, Rainer, Grundig E.M.V., D-90748 Fürth (DE); Hallas, Ernst, Dr., Grundig E.M.V., D-90748 Fürth (DE)
(74) Vertreter: Dreykorn-Lindner, Werner, Dipl.-Ing.

(57) **Zusammenfassung**

Die Anmeldung betrifft ein Verfahren zum Messen der durch Verunreinigungen verursachten Trübungen einer Flüssigkeit oder eines gasförmigen Mediums durch Messung der Absorption und/oder der Streuung mittels einer Farbkamera.

Aus den RGB-Komponenten des empfangenen Signales wird bei dem Verfahren der am Lichtverlust beteiligte Farbanteil bestimmt, indem aus dem Verhältnis der Farbanteile zueinander die Färbung im Vergleich zu einer Probe festgestellt wird. Der verbleibende Lichtverlust, der nicht durch Färbung verursacht wird gibt den Grad der Trübung an.

## Beschreibung

Die Erfindung betrifft eine Anordnung zum Messen von Trübungen in Flüssigkeiten oder gasförmigen Medien, in denen die Trübung durch Messen der Absorption und/oder der Streuungen, die durch Verunreinigungen verursacht werden, bestimmt wird und mit der die Absorption und/oder die Streuung mit einem optischen Sensor gemessen wird.

Zur Untersuchung von flüssigen oder gasförmigen Stoffen auf allgemeine Verunreinigungen hin, beispielsweise Schwebeteilchen, organische oder anorganische Fremdkörper im Wasser oder Abgase von Verbrennungsmotoren auf Ruß und Staub hin, wird häufig das Transmissionsverhalten von Licht verwendet, um die Trübung einer Probe zu bestimmen und dadurch Rückschlüsse auf den Grad der Verunreinigung zu ziehen.

Es ist weiterhin bekannt, bei Trübungsmessungen in Flüssigkeiten das Streulicht der trübenden Teilchen zu erfassen und als repräsentative Größe für die Trübung auszuwerten.
Zur Messung kann Licht einer vorgegebenen Frequenz und Intensität in eine Probe eingestrahlt werden. Die Verunreinigungen in der Probe haben entweder Absorption durch physikalische Resonanz mit der Lichtstrahlung oder Streulichtverluste zur Folge. Die Anteile der Strahlungsverluste hängen von den Größenverhältnissen zwischen den verunreinigenden Teilchen und der eingestrahlten Lichtwellenlänge ab. Bei sehr großen verunreinigenden Teilchen, z.B. Flockungen, kommt als weiterer Strahlungsverlust eine rein thermische Absorption hinzu.

Zum gesamten Strahlungsverlust auf der Meßstrecke tragen somit die Reflexion und die Absorption an optischen Elementen, die Strahlungsabsorptionen im Meßmedium sowie Streulichtverluste bei. Um zuverlässigere Meßergebnisse zu erhalten, wird bei bekannten Trübungsmeßgeräten eine Kombination aus Transmissionsmessung und Streulichtmessung durchgeführt, um beispielsweise Meßfehler durch Färbung (Resonanzabsorption) zu vermeiden.

Aus der deutschen Patentschrift DE 37 06 458 C2 ist eine Vorrichtung bekannt, bei der von der lichtemittierenden Einrichtung, die vorzugsweise aus gepulsten Lasern besteht, kurzzeitig Lichtimpulse mit bekannter Energie ausgesendet werden. Vorzugsweise werden dort zwei Laser eingesetzt, die Licht unterschiedlicher Wellenlänge emittieren. Das Licht eines Lasers dient zur Absorptionsmessung, das des zweiten wird zur Fluoreszenzmessung verwendet.
Beide Empfangssignale werden von einem breitbandigen Empfänger aufgenommen. Die empfangene Signalform wird in einer Auswerteschaltung dahingehend analysiert, ob sie von der ursprünglichen Strahlung oder der Fluoreszenzstrahlung verursacht ist.

Das Hauptproblem bei den bekannten Anordnungen bzw. Verfahren besteht in der Empfindlichkeit, mit der gemessen wird. So ist eine hohe Lichtsendeleistung bei großer Trübung erforderlich und zusätzlich werden sehr empfindliche Sensoren benötigt, um hinreichend genaue Messungen durchführen zu können.

Weiterhin sind Absorptionseffekte durch Färbung nur mit großem Aufwand von Absorptionseffekten durch Verschmutzung unterscheidbar.

Aufgabe der Erfindung ist es deshalb, eine Anordnung zur Trübungsmessung anzugeben, bei der die oben genannten Nachteile vermieden werden.

Diese Aufgabe wird gelöst, indem der zur Trübungsmessung eingesetzte optische Sensor aus einer Farbkamera besteht. Aus den RGB-Komponenten oder dem Y/C-Signal des empfangenen Signales wird bei der erfindungsgemäßen Anordnung der am Lichtverlust beteiligte Farbanteil bestimmt, indem aus dem Verhältnis der Farbanteile zueinander die Färbung im Vergleich zu einer Probe festgestellt wird. Der verbleibende Lichtverlust, der nicht durch Färbung verursacht wird, gibt den Grad der Trübung an.

Die wesentlichen Vorteile beim Einsatz einer Kamera ergeben sich aus der sehr hohen Empfindlichkeit und der möglichen Unterscheidung der Absorptionsursache. Durch den Einsatz einer Kamera wird der ansonsten übliche Sensor, meist eine Photodiode oder ein Photomultiplier, durch einen flächenhaften Sensor ersetzt. Dieser flächenhafte Sensor besitzt eine Vielzahl einzelner lichtempfindlicher Elemente, wodurch sich eine sehr hohe Dynamik ergibt. Beispielsweise ergibt sich bei einer praktisch nutzbaren Dynamik eines einzelnen Bildaufnahmeelementes von 10² und einer Bildelementanzahl von 300000 eine Dynamik in der Größenordnung 10⁷. Durch diese hohe Dynamik und die Unterscheidungsmöglichkeit des Lichtverlustes nach Farbe und relevanter Trübung kann in den meisten Anwendungsfällen auf eine aufwendige Beleuchtung der Meßzelle oder des Meßbereiches verzichtet werden.

So ist es in der Regel nicht mehr notwendig Lichtsender durch Auswahl der Strahlungsquelle oder durch schmalbandige Filter auf einen schmalen Frequenzbereich zu begrenzen. Ebenfalls kann in den meisten Fällen die Lichtintensität der Beleuchtung reduziert werden.

Insbesondere durch den Einsatz von CCD-Sensoren als Aufnahmeelement der Farbkamera ergeben sich Vorteile, da diese eine sehr hohe Dynamik besitzen. Außerdem sind sie sehr klein, was den Bereich der Anwendungsmöglichkeiten ausdehnt.

Durch das Vorschalten von Filtern kann die Auswertung auf bestimmte Bereiche eingeschränkt werden. Insbesondere der Einsatz von Infrarotfiltern begrenzt die Auswertung auf den sichtbaren Bereich. Durch diese Einschränkung vereinfacht sich die Auswertung bei Messungen, die nur für den sichtbaren Bereich durchgeführt werden sollen.

Als vorteilhaft für den universelleren Einsatz erweist sich ein Infrarotfilter, das dem CCD-Sensor teilweise vorgeschaltet ist. Eine nachgeschaltete Auslese- und Auswerteschaltung verarbeitet in diesem Fall die gemessene Lichtmenge der Teile mit und ohne Filter getrennt.
Auf diese Weise liegen die Meßergebnisse mit und ohne Infrarotanteil getrennt vor. Durch die Bildung der Differenz der beiden Ergebnisse kann der reine Infrarotanteil eliminiert werden, wenn nur der sichtbare Teil ausgewertet werden soll. Soll der Infrarotanteil ausgewertet werden, kann ebenfalls durch Differenzbildung der sichtbare Bereich ausgeklammert werden.

Auf diese Weise ist die CCD-Kamera als reiner Infrarot-Sensor ebenso einsetzbar wie als Sensor für den sichtbaren Bereich. Durch geeignete Signalauswertung kann auch eine Korrelation zur trübenden oder färbenden Teilchengröße bestimmt werden.
Durch die weite Verbreitung von CCD-Kameras und entsprechender Bildauswerteverfahren kann beim Einsatz dieser Kameras auf eine bekannte und preiswerte Technik bezüglich der Auswertung zurückgegriffen werden.

Bei Anwendungen, bei denen lediglich eine Trübung, ohne genauere Bestimmung der Ursache der Trübung, gemessen werden soll, ist es vorteilhaft eine Schwarz/Weiß-CCD-Kamera einzusetzen. Diese Lösung ist bei gleich hoher bzw. höherer Dynamik vergleichsweise preiswert. Bestimmte Bereiche des Spektrums, beispielsweise Infrarot, können auch hier mit entsprechenden Filtern ausgeblendet werden.

Eine vorteilhafte Ausgestaltung der Erfindung ergibt sich, wenn das Signal der Lichtquelle dem optischen Sensor separat als Referenzsignal zugeführt wird und in Abhängigkeit von diesem Referenzsignal entweder eine Empfindlichkeitsanpassung des optischen Sensors oder eine Anpassung der Lichtstärke der Lichtquelle durchgeführt wird. Durch diese Ausgestaltung der Erfindung ist es in einfacher Weise möglich, eine Anpassung an die gegebenen Verhältnisse zu erreichen. So kann beispielsweise bei geringer Trübung die Empfindlichkeit des Sensors bzw. die Lichtintensität der Lichtquelle verringert werden, während bei starker Trübung eine Erhöhung der Sensorempfindlichkeit bzw. der Lichtintensität der Lichtquelle notwendig ist.

Die vorstehende Beschreibung bezieht sich ohne Einschränkung der Allgemeinheit auf Trübungsmessungen in Flüssigkeiten. Mit der beschriebenen Anordnung können beispielsweise auch Trübungsmessungen in Gasen durchgeführt werden.

## Patentansprüche

1. Anordnung zum Messen von Trübungen in Flüssigkeiten oder gasförmigen Medien, in denen die Trübung durch Messen der Absorption und/oder der Streuung, die durch Verunreinigungen verursacht wird, bestimmt wird und bei der die Absorption und/oder die Streuungen mit einem optischen Sensor gemessen wird,
**dadurch gekennzeichnet**, daß
der optische Sensor aus einer Farbkamera besteht, bei der aus den RGB-Komponenten der am Lichtverlust beteiligte Farbanteil bestimmt wird, indem aus dem Verhältnis der Farbanteile zueinander die Färbung im Vergleich zu einer Probe festgestellt wird und der verbleibende Lichtverlust als Maß für die Trübung ausgewertet wird.

2. Anordnung nach Anspruch 1, **dadurch gekennzeichnet**, daß
die Farbkamera einen CCD-Sensor zur Bildaufnahme enthält.

3. Anordnung nach Anspruch 1 oder 2, **dadurch gekennzeichnet**, daß der Infrarotanteil durch ein Infrarotfilter ausgeblendet wird.

4. Anordnung nach Anspruch 3, **dadurch gekennzeichnet**, daß
dem CCD-Sensor teilweise ein Infrarotfilter vorgeschaltet ist und eine Auslese- und Auswertevorrichtung nachgeschaltet ist, bei der die Lichtmenge bei den Teilen mit und ohne Filter getrennt verarbeitet wird.

5. Anordnung nach Anspruch 4, **dadurch gekennzeichnet**, daß
das Infrarotfilter der Hälfte der CCD-Sensorfläche vorgeschaltet ist.

6. Anordnung nach einem oder mehreren der Ansprüche 1 bis 5, **dadurch gekennzeichnet**,
daß eine Schwarz/Weiß-CCD-Kamera als Sensor eingesetzt wird.

7. Anordnung nach einem oder mehreren der Ansprüche 1 bis 6, **dadurch gekennzeichnet**,
daß das Signal der Lichtquelle der Kamera separat als Referenzsignal zugeführt wird und in Abhängigkeit vom Referenzsignal eine Empfindlichkeitsanpassung der Kamera oder eine Anpassung der Lichtstärke der Lichtquelle durchgeführt wird.
